**Europäisches Patentamt**

(19) **European Patent Office**

**Office européen des brevets**

(11) Veröffentlichungsnummer: **0 260 440 B1**

(12)

# EUROPÄISCHE PATENTSCHRIFT

(45) Veröffentlichungstag der Patentschrift:
24.10.90

(51) Int. Cl.⁵: **B61F 5/52, B29D 31/00**

(21) Anmeldenummer: 87111713.1

(22) Anmeldetag: 13.08.87

(54) Eckverbindung zwischen zwei Faserverbund-Trägern.

(30) Priorität: 09.09.86 DE 3630593

(43) Veröffentlichungstag der Anmeldung:
23.03.88 Patentblatt 88/12

(45) Bekanntmachung des Hinweises auf die Patenterteilung:
24.10.90 Patentblatt 90/43

(84) Benannte Vertragsstaaten:
AT GB IT SE

(56) Entgegenhaltungen:
EP-A- 0 031 008
DE-B- 1 262 566
US-A- 4 029 172

GLASERS ANNALEN ZEITSCHRIFT FÜR
EISENBAHNWESEN UND VERKEHRSTECHNIK,
Band 110, Nr. 6/7, Juni/Juli 1986, Seiten 193-202, Geo,
Berlin, DE; R. LEO et al.: "Neue Technologien für
Drehgestelle: Prototyp des ersten
Faserverbundwerkstoff (FVW)-Drehgestells" OKU -
KANTO GAKUIN DAIGAKU
KOGAKUBU 1984, 27(1), 25-9on" die Sicherheitstechnik
beim Umgang mit Braun 000

(73) Patentinhaber: Messerschmitt-Bölkow-Blohm
Gesellschaft mit beschränkter Haftung,
Robert-Koch-Strasse, D-8012 Ottobrunn(DE)

(72) Erfinder: Engelsberger, Ernst, Preysingstrasse 34,
D-8019 Glonn(DE)
Erfinder: Nowak, Franz, Meulanstrasse 28,
D-8028 Taufkirchen(DE)

## Beschreibung

Die Erfindung bezieht sich auf eine Eckverbindung zwischen einem Längs- und einem Querträger aus Faserverbundwerkstoff nach dem Oberbegriff des Patentanspruchs 1.

Eckverbindungen zwischen hochbelasteten Faserverbund-Trägern der beanspruchten Art, wie sie etwa bei Faserverbund-Drehgestellrahmen von Hochgeschwindigkeits-Reisezugwagen vorhanden sind (siehe EP-A 0 031 008), gehören zu den kritischen Stellen einer Faserverbundstruktur, weil hier einerseits die angreifenden Kräfte und Momente auf engem Raum von dem einen in den anderen Träger umgelenkt werden müssen, andererseits aber eine durchlaufend homogene Faserbindung zwischen den beiden Trägern fehlt. Aus diesem Grund werden hochbelastete Faserverbund-Träger im Eckbereich bisher mit Hilfe von massiven Eckstücken, metallischen Beschlägen oder verschiedenartigen anderen Verbindungselementen kraftübertragend miteinander verbunden, was für die Gesamtstruktur nicht nur eine beträchtliche Gewichtserhöhung zur Folge hat, sondern auch eine bei ausreichender Lastsicherheit herstellungsmäßig komplizierte Anbindung der Träger-Endabschnitte, und vor allem der Gurtlaminate an die Eckverbindungselemente erforderlich macht.

Aufgabe der Erfindung ist es, eine Eckverbindung der beanspruchten Art mit rein faserverbundtechnischen Mitteln und unter Beibehalt der Trägerstruktur hochgradig lastsicher, herstellungsmäßig einfach und gewichtssparend auszubilden.

Diese Aufgabe wird erfindungsgemäß durch die im Anspruch 1 gekennzeichnete Eckverbindung gelöst.

Bei der erfindungsgemäßen Eckverbindung wird aufgrund der besonderen Anordnung, gegenseitigen Verzahnung und mehrflächigen Verklebung der Gurt-Fortsätze des Quer- und der Gurtlaminate des Längsträgers sichergestellt, daß die kräfteführenden Faserschichten der beiden Träger ohne jegliche metallische oder ähnliche externe Verbindungselemente direkt miteinander während des Aushärtprozesses verbunden und die in Betrieb auftretenden Kräfte und Momente unter Vermeidung örtlicher Überspannung auf kürzestem Wege von dem einen in den anderen Träger übergeleitet werden. Die Eckverbindung läßt sich ohne Änderung der Gurtlaminat-Struktur der beiden Träger relativ einfach herstellen und wegen ihrer gewichtsmäßig leichten, hochgradig last- und faserverbundgerechten Ausbildung in hervorragender Weise als Knotenpunkt einer hochbeanspruchten Faserverbundstruktur verwenden, also etwa eines Drehgestellrahmens in Faserverbundbauweise.

Um die mehrschichtige Verklammerung und Verklebung der oberen und unteren Gurtlaminate der beiden Träger weiter zu verbessern, ist gemäß Anspruch 2 in besonders bevorzugter Weise ein zusätzliches Faserverbundlaminat im Bereich der Eckverbindung auf die Außenseite der Ober- und Untergurte der beiden Träger auflaminiert. Aufgrund der U-förmigen Ausbildung und seitlichen Verklebung dieses zusätzlichen Klammerlaminats gemäß Anspruch 3 werden auch die Abstandhalter der beiden Träger unmittelbar und nicht nur über das zugehörige Gurtlaminat lastübertragend in die Eckverbindung einbezogen. Im Hinblick auf die auftretenden Schub- und Querkraftbelastungen wird für das Klammerlaminat gemäß Anspruch 4 zweckmäßigerweise eine sich kreuzende Faserorientierung gewählt.

Die Anbindung der Gurt-Fortsätze am Gurtlaminat des Querträgers einerseits und an den Längsträger-Gurten andererseits läßt sich dadurch wesentlich verbessern, daß die Fortsätze gemäß Anspruch 5 an den Querträger-Gurten nicht angeschäftet, sondern einstückig mit fortlaufender Faserstruktur angeformt sind und gemäß Anspruch 6 im Hinblick auf eine großflächige Kraftüberleitung breiter als die Querträger-Gurte ausgebildet und im wesentlichen über die gesamte Breite der Längsträger-Gurte mit diesen verklebt sind.

Um im Bereich der Verbindungsstelle zwischen Querträger-Fortsätzen und Längsträger-Gurten eine gleichförmige Kraftverteilung zu erreichen, vor allem aber aus Herstellungsgründen sind die Fortsätze und Gurte gemäß Anspruch 7 bevorzugt in der Weise ineinander greifend zusammengefügt, daß zunächst die Fortsätze des Querträgers gehärtet und dann die Längsträger-Gurte im noch ungehärteten Zustand im Bereich der Eckverbindung in mehrere, im wesentlichen gleich dicke, den zugeordneten, vorgehärteten Fortsatz des Querträgers zwischen sich einschließende Faserschichten unterteilt und im anschließenden Härtungsprozeß mehrflächig mit dem Fortsatz verklebt werden.

Falls der Längsträger aus Versteifungsgründen von einer Faserverbund-Torsionsschale umschlossen ist, wird diese gemäß Anspruch 8 in besonders bevorzugter, herstellungs und lastgünstiger Weise als Kraftübertragungselement der Eckverbindung genutzt, und um mit der Torsionsschale nicht nur den Gurtbereich, sondern auch den Abstandhalter des Querträger-Endabschnitts umschließen zu können, ist die Torsionsschale gemäß Anspruch 9 zweckmäßigerweise mehrteilig mit seitlichen, den Abstandhalter des Querträgers übergreifenden Schalenteilen ausgebildet. Im Hinblick auf die torsionsversteifende Funktion der Torsionsschale besitzt diese gemäß Anspruch 10 vorzugsweise eine ± 45°-Faserorientierung bezüglich der Träger-Längsachse.

Durch die nach Anspruch 11 vorgesehenen, unidirektionalen Faserlagen wird der Querträger bezüglich der im Eckbereich wirksamen Normalspannungen örtlich verstärkt.

Ein weiterer ganz wesentlicher Aspekt der Erfindung besteht darin, daß mit der Eckverbindung auch völlig verschiedenartig belastete und dementsprechend unterschiedlich strukturierte Faserverbund-Träger verbunden werden können. So ist der Längsträger gemäß Anspruch 12 in erster Linie für Biegebelastungen konzipiert, wobei die sich in die ünidirektional-Gurtlaminate erstreckenden Randabschnitte der den Abstandhalter bildenden Faserverbund-Stege im Bereich der Eckverbindung mit Schlitzen zur Aufnahme der Querträger-Fortsätze versehen sind, während der Querträger gemäß Anspruch 13 ein hochgradig torsionssteifer, kastenförmiger Hohlträger mit einem großen Anteil von unter ± 45° gewickelten Fasern ist, wobei das an die Eckverbindung angrenzende Ende des Hohlträgers zur Erhöhung der Torsionssteifigkeit gemäß Anspruch 14 vorzugsweise durch einen Faserverbund-Vollspant verschlossen ist.

Wie bereits erwähnt, ist die erfindungsgemäße Eckverbindung trotz ihrer reinen Faserverbund-Bauweise vergleichsweise einfach mit der geforderten hohen Lastfestigkeit herzustellen, und eine in dieser Hinsicht besonders vorteilhafte Ausgestaltung der Erfindung wird gemäß Anspruch 15 dadurch erreicht, daß sich mindestens einige Bestandteile der Eckverbindung beim Zusammenfügen im noch ungehärteten Zustand befinden und die gesamte Eckverbindung beim Aushärten dieser Bestandteile gleichzeitig zu einer nach außen geschlossenen, komp akten Fasserverbundstruktur verklebt wird.

Die Erfindung wird nunmehr anhand eines Ausführungsbeispieles in Verbindung mit den Zeichnungen näher erläutert. Es zeigen in schematischer Darstellung:

Fig. 1 Die Aufsicht eines aus Quer- und Längsträgern sowie Eckverbindungen zwischen diesen bestehenden Drehgestellrahmens in Faserverbundbauweise;

Fig. 2 Den Längsträger im Querschnitt längs der Linie II-II der Fig. 1;

Fig.3 Eine perspektivische Endansicht des Querträgers vor dem Zusammenfügen der Eckverbindung;

Fig. 4 Die Eckverbindung im Schnitt längs der Linie IV-IV der Fig. 1; und

Fig. 5 Eine perspektivische Ansicht der Eckverbindung vor dem Zusammenfügen ihrer einzelnen Bestandteile.

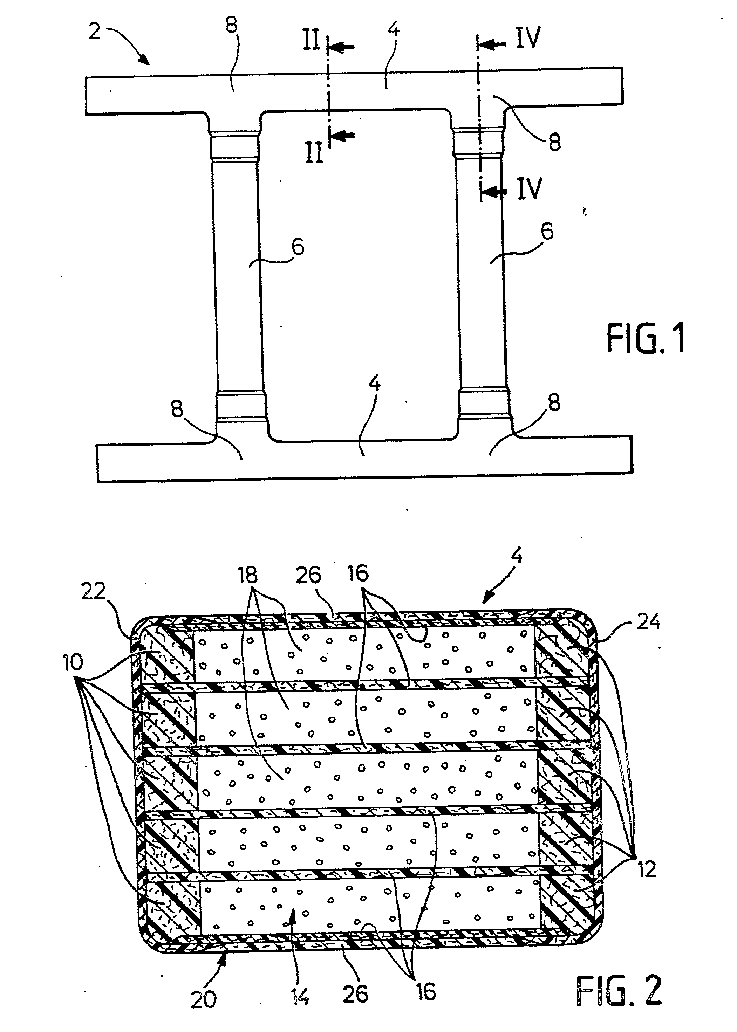

Der in Fig. 1 gezeigte Hochgeschwindigkeits-Drehgestellrahmen 2 ist nach Art eines Doppel-H-Rahmens aus zwei, hauptsächlich biegebelasteten Faserverbund-Längsträgern 4 und zwei, hochgradig torsionssteifen Faserverbund-Querträgern 6 zusammengesetzt, welche mit den Längsträgern 4 über Eckverbindungen 8, die ebenfalls als Faserverbundstruktur ausgebildet sind und eine nach außen geschlossene, kompakte Form aufweisen, lastübertragend verbunden sind.

Wie Fig. 2 zeigt , enthält der als Biegeträger ausgebildete Längsträger 2 einen Ober- und einen Untergurt 10, 12 jeweils in Form eines Gurtlaminats mit einer unidirektionalen Faserorientierung in Träger-Längsrichtung, sowie einen zwischen den Gurten 10, 12 angeordneten Abstandhalter 14, der aus lamellenartig über die Breite des Längsträgers 4 verteilten, randseitig in den oberen und unteren Gurt 10, 12 sich erstreckenden und in diesen eingebundenen Faserverbund-Schubstegen 16 mit einer zur Träger-Längsrichtung geneigten, sich kreuzenden Faserorientierung zusammengesetzt ist, wobei in die in Träger-Längsrichtung verlaufenden Hohlkammern zwischen den Schubstegen 16 Schaumstoffstreifen 18 eingeklebt sind. Auf der Außenseite ist der Längsträger 4 von einer torsionsversteifenden Faserverbund-Schale 20 umschlossen, die eine Faserorientierung von ± 45° bezüglich der Täger-Längsrichtung aufweist und aus U-förmigen, jeweils den Gurt 10 bzw. 12 des Längsträgers 4 umgreifenden Ober- und Unterteilen 22, 24 und zwischen diesen eingeschäfteten, seitlichen Schalenteilen 26 besteht.

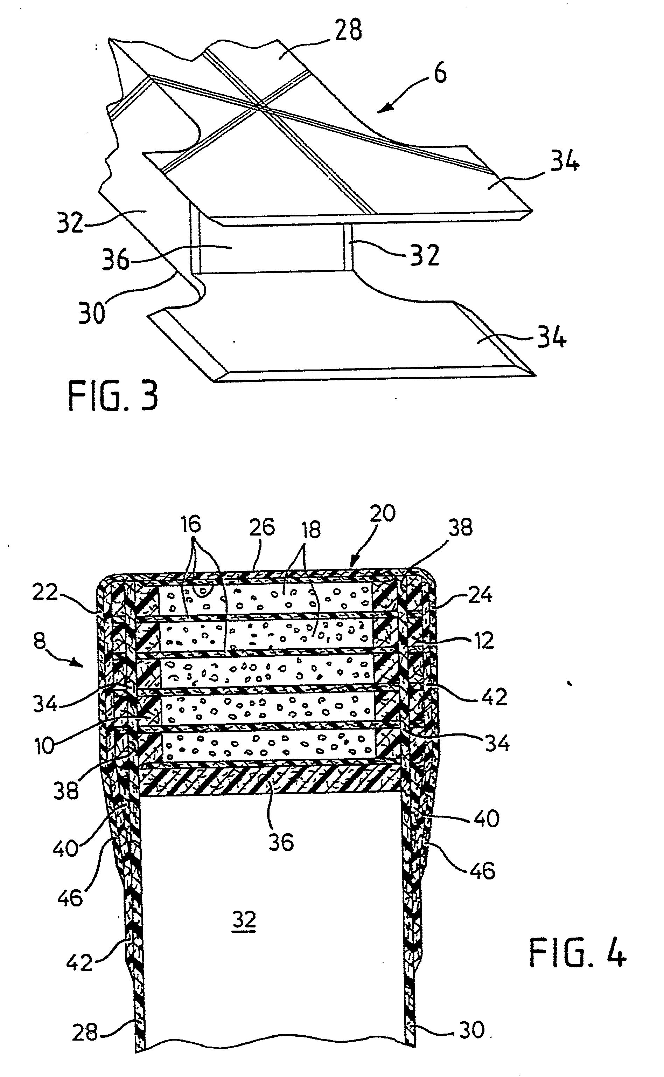

Der Querträger 6 ist, wie Fig. 3 im einzelnen zeigt, im Hinblick auf eine hohe Torsionssteifigkeit als kastenförmiger Hohlträger mit oberen und unteren, jeweils als Gurt wirkenden Wandbereichen 28, 30 und einstückig zwischen diesen angeordneten, als Abstandhalter wirkenden Seitenwänden 32 ausgebildet. An den Enden des Querträgers 6 sind die oberen und unteren Wandbereiche 28, 30 jeweils mit einem einstückig mit fortlaufender Faserstruktur angeformten Faserverbund-Fortsatz 34 versehen. Die Fortsätze 34 sind gegenüber den Gurten 28, 30 des Querträgers 6 verbreitert ausgebildet, und ihre Länge entspricht im wesentlichen der Breite der Längsträger 4.

Zur Herstellung des Hohlträgers 6 wird ein umlaufender Wickeldorn mit einem dem Innenquerschnitt des Hohlträgers 6 entsprechenden Vierkant-Querschnitt kontinuierlich mit einem Verstärkungsfaden, der mit der Harzmatrix des Faserverbundwerkstoffs vorgetränkt ist, auf einer den Hohlträger 6 einschließlich der Fortsätze 34 entsprechenden Länge dicht bewickelt, derart, daß der entstehende Laminat-Wickelkörper aus über die gesamte Wickelkörper-Länge verlaufenden Faserlagen von ± 45° und zwischen diese eingefügten, zusätzlichen Faserlagen mit unidirektionaler Faserorientierung bezüglich der Hohlträger-Längsachse aufgebaut ist, wie dies durch das Fadenmuster in Fig. 3 angedeutet ist. Zur örtlichen Verstärkung der die Fortsätze 34 bildenden Endabschnitte des Wickelkörpers können weitere (nicht gezeigte) unidirektionale Fasereinlagen in das Wickellaminat eingefügt sein.

Nach Beendigung des Wickelvorganges wird das Wickellaminat vom Wickelkörperende aus an den Seitenwänden 32 jeweils T-förmig längs einer sich in Wickelkörper-Längsrichtung entsprechend der Länge der Fortsätze 34 und hierzu senkrecht bis zu den Wandbereichen 28, 30 erstreckenden Schnittlinie durchtrennt, woraufhin die so abgetrennten Wandabschnitte der Seitenwände 32 um ihre gerade Verbindungslinie zum zugehörigen oberen bzw. unteren Wandbereich 28, 30 in dessen Ebene hochgeklappt und in dieser Lage gehalten werden.

Trotzdem die außenliegenden Faserlagen des Wickelkörpers eine größere Umfangslänge als die innenliegenden haben, verbleiben durch das Hochklappen keine störenden Faser-Desorientierungen, sondern vielmehr werden die unterschiedlichen Umfangslängen durch gegenseitige Verschiebung der einzelnen Faserlagen während des nachfolgenden Härtungszyklus unter der Wirkung der Faden-Eigensteifigkeit ausgeglichen, wenn nur zu Beginn der Warmhärtphase, also wenn die Harzmatrix in den dünnflüssigen Zustand gelangt, der Druck des Presswerkzeuges, in das der Wickelkörper zusammen mit dem Wickeldorn eingelegt wird, ausreichend langsam gesteigert wird. Die zum Längenausgleich erforderliche Verschiebung der Einzellagen ist in Fig. 3 durch den schrägen Verlauf der Seitenkanten der Fortsätze 34 angedeutet.

Nach dem Aushärten des Wickelkörpers wird der Wickeldorn entfernt und der Hohlträger 6 wird an den Enden zur Erhöhung der Torsionssteifigkeit durch einen Faserverbund-Vollspant 36 verschlossen und - unter anderem zur Erzielung gerundeter Übergänge zu den Fortsätzen 34 - fertigbearbeitet.

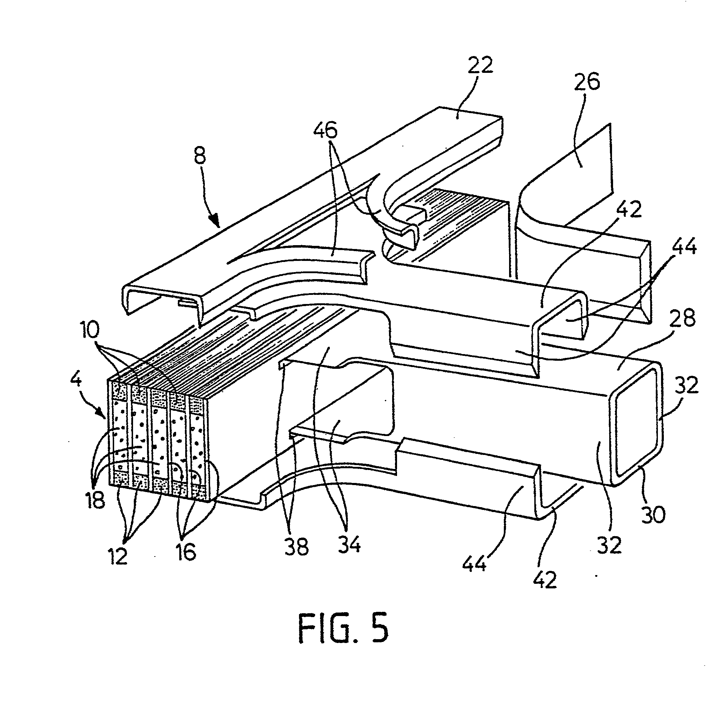

Zur Herstellung der in den Fig. 4 und 5 gezeigten Eckverbindung wird der vorgefertigte Querträger 6 mit seinen Fortsätzen 34 in einen Teilzusammenbau des Längsträgers 4 eingeschoben, welcher aus den zuvor ausgehärteten und zugeschnittenen Schubstegen 16 und den zwischen diese eingeklebten, auf Kontur beschnittenen und auf Dicke bearbeiteten Schaumstoffstreifen 18 besteht, wobei die oberen und unteren, frei über die Schaumstoffstreifen 18 vorstehenden Schubsteg-Randbereiche jeweils etwa zur Hälfte mit dem noch ungehärteten Faserverbund-Laminat der oberen und unteren Uni direktional-Gurte 10, 12 des Längsträgers belegt und im Bereich der Eckverbindung mit Schlitzen 38 zur Aufnahme der Querträger-Fortsätze 34 versehen sind. Daraufhin wird die restliche Hälfte des oberen und unteren Gurtlaminates 10, 12 zwischen die Schubstege 16 und über die in die Aufnahmeschlitze 38 eingeschobenen Fortsätze 34 eingelegt. Auf diese Weise wird in der fertigen Eckverbindung eine direkte Einleitung des Kräftepaares aus dem Torsionsmoment des Querträgers 6 in die Gurte 10, 12 des Längsträgers 4 erreicht.

Durch vorgehärtete Füllkeile 40, ebenfalls aus Faserverbundwerkstoff, wird der Höhensprung zwischen der Außenseite der Längsträger-Gurte 10, 12 und der Oberseite der Querträger-Wandbereiche 28, 30 ausgeglichen. Als weiterer Bestandteil enthält die Eckverbindung ein die Längsträger-Gurte 10, 12 und die Querträger-Wandbereiche 28, 30 klammerartig übergreifendes, oberes und unteres Faserverbund-Laminat 42, welches aufgrund der gewählten Faserorientierung von ± 45° die um eine Achse senkrecht zur Flächenerstreckung der Eckverbindung wirksamen Biegemomente des Querträgers 6 ebenfalls in die Längsträger-Gurte 10, 12 überleitet und im noch ungehärteten Zustand mit U-förmigem Querschnitt derart auflaminiert wird, daß seine seitlichen Schenkel 44 an den Seitenwänden 32 des Querträgers 6 anliegen.

Als äußerste Schicht ummantelt die Torsionsschale 20 des Längsträgers 4 das Ende des Querträgers 6. Zu diesem Zweck wird die Torsionsschale 20 im ebenfalls noch ungehärteten Zustand am oberen und unteren Schalenteil 22, 24 im Bereich der Eckverbindung aufgeschnitten, und die aufgetrennten Wandabschnitte 46 werden über den Querträger 6 gezogen, und gleichzeitig wird das querträgerseitige Torsionsschalenteil 26,den Eckbereich übergreifend, seitlich an den Querträger-Endabschnitt angelegt.

Durch Einwirkung von Wärme und einem allseitigen Preßdruck werden anschließend die noch ungehärteten Faserverbundteile ausgehärtet und gleichzeitig sämtliche Bestandteile der Eckverbindung zu einem integralen Knotenpunkt miteinander verbunden. Die fertiggestellte Eckverbindung vermag Kräfte und Momente in allen drei Koordinatenrichtungen lastsicher zu übertragen, wobei die für jede Kraftrichtung mehrfach vorhandenen Klebeflächen im Inneren der Eckverbindung die für die Lebensdauer und Funktionssicherheit wichtige, sogenannte "fail-safe"-Eigenschaft ergeben, d. h. bei einem eventuellen Fertigungsfehler oder einer Schädigung einer Klebefläche während des Betriebs können die wirksamen Kräfte mit ausreichender Sicherheit von den übrigen Klebeflächen aufgenommen werden.

## Patentansprüche

1. Eckverbindung (8) zwischen einem Längs- und einem Querträger (4, 6) aus Faserverbundwerkstoff, insbesondere für den Drehgestellrahmen (2) eines Hochgeschwindigkeits-Reisezugwagens, wobei jeder Träger (4 bzw. 6) mit einem Ober- und einem Untergurt (10, 12 bzw. 28, 30) aus Faserverbund-Laminat und einem zwischen die Gurte eingefügten Abstandhalter (14 bzw. 32) versehen ist, dadurch gekennzeichnet, daß der Ober- und Untergurt (28, 39) des Querträgers (4) endseitig jeweils mit einem laschenförmigen Faserverbund-Fortsatz (34) versehen ist und die oberen und unteren Gurtlaminate (10, 12) des Längsträgers (4) und Fortsätze (34) des Querträgers (6) jeweils mehrschichtig ineinandergreifend zusammengefügt und beim Aushärten der Gurtlaminate und/oder der Fortsätze miteinander verklebt sind.

2. Eckverbindung nach Anspruch 1, dadurch gekennzeichnet, daß die Ober- bzw. Untergurte (10, 12; 28, 30) des Längs- und Querträgers (4, 6) auf der Gurtaußenseite durch ein die Gurte im Bereich der Eckverbindung (8) klammerartig übergreifendes Faserverbund-Laminat (42) miteinander verbunden sind.

3. Eckverbindung nach Anspruch 2, dadurch gekennzeichnet, daß das klammerartige Faserverbund-Laminat (42) im Querschnitt U-förmig ausgebildet und im Bereich der U-Schenkel (44) seitlich mit dem Abstandhaltern (14; 32) des Längs- und Querträgers (4, 6) verklebt ist.

4. Eckverbindung nach Anspruch 2 oder 3, dadurch gekennzeichnet, daß das klammerartige Faserverbund-Laminat (42) eine sich kreuzende Faserorientierung aufweist.

5. Eckverbindung nach einem der vorhergehenden Ansprüche, dadurch gekennzeichnet, daß die Fortsätze (34) einstückig mit fortlaufender Faserstruktur an den Gurten (28, 30) des Querträgers (6) angeformt sind.

6. Eckverbindung nach einem der vorhergehenden Ansprüche, dadurch gekennzeichnet, daß die Fortsätze (34) gegenüber den Gurten (28, 30) des Querträgers (6) verbreitert ausgebildet sind und sich im wesentlichen über die gesamte Breite der Längsträger-Gurte (10, 12) erstrecken.

7. Eckverbindung nach einem der vorhergehenden Ansprüche, dadurch gekennzeichnet, daß jeder Gurt (10, 12) des Längsträgers (4) im Bereich der Eckverbindung in mehrere, im wesentlichen gleich dicke, den zugeordneten Fortsatz (3) des Querträgers (6) zwischen sich einschließende Faserverbundschichten unterteilt ist.

8. Eckverbindung nach einem der vorhergehenden Ansprüche, dadurch gekennzeichnet, daß der Längsträger (4) von einer im Bereich der Eckverbindung aufgeschnittenen und mit den aufgetrennten Wandabschnitten (46) um den angrenzenden Querträger-Endabschnitt seitlich und im Gurtbereich greifenden Torsionsschale (20) umschlossen ist.

9. Eckverbindung nach Anspruch 8, dadurch gekennzeichnet, daß die Torsionsschale (20) mehrteilig mit einem U-förmigen, jeweils den Gurtbereich (10, 12) des Längsträgers (4) umschließenden Ober- und Unterteil (22, 24) und seitlichen Schalenteilen (26) ausgebildet ist.

10. Eckverbindung nach Anspruch 8 oder 9, dadurch gekennzeichnet, daß die Torsionsschale (20) eine ± 45°-Faserorientierung bezüglich der Träger-Längsachse besitzt.

11. Eckverbindung nach einem der vorhergehenden Ansprüche, dadurch gekennzeichnet, daß zur örtlichen Verstärkung des Querträgers (6) im Bereich der Gurtenden und der Fortsätze (34) zusätzliche Faserlagen mit in Träger-Längsrichtung unidirektionaler Faserorientierung vorgesehen sind.

12. Eckverbindung nach einem der vorhergehenden Ansprüche, dadurch gekennzeichnet, daß die Gurte (10, 12) des Längsträgers (4) eine in Träger-Längsrichtung unidirektionale Faserorientierung aufweisen und als Abstandhalter (14) zwischen den Gurten sich in das Gurtlaminat erstreckende Faserverbund-Stege (16) vorgesehen sind, die im Bereich der Eckverbindung mit Schlitzen (38) zur Aufnahme der Fortsätze (34) des Querträgers (6) versehen sind.

13. Eckverbindung nach einem der vorhergehenden Ansprüche, dadurch gekennzeichnet, daß der Querträger (6) als im Querschnitt rechteckiger geschlossener Hohlträger mit einer sich kreuzend gewickelten Faserstruktur und mit als Gurte wirkenden oberen und unteren Wandbereichen (28, 30) und als Abstandhalter wirkenden Seitenwänden (32) ausgebildet ist.

14. Eckverbindung nach Anspruch 13, dadurch gekennzeichnet, daß der Hohlträger (6) im Bereich seines an die Eckverbindung angrenzenden Endabschnitts durch einen Faserverbund-Vollspant (36) ausgesteift ist.

15. Eckverbindung nach einem der vorhergehenden Ansprüche, dadurch gekennzeichnet, daß mindestens einige Bestandteile der Eckverbindung, einschließlich der Gurte (10, 12) des einen Trägers (4) im ungehärteten Zustand zusammengefügt und durch Aushärten des Faserverbundwerkstoffs unter Druck- und Wärmeeinwirkung verklebt sind.

## Claims

1. A corner joint (8) between a longitudinal and a cross support (4, 6) of composite fibre material, in particular for bogie frames (2) of a high-speed train carriage, in which respect each support (4 or 6 respectively) is provided with a top and a bottom strip (10, 12 or 28, 30 respectively) of composite fibre laminate and with a spacer (14 or 32 respectively) between the strips, characterised in that the top and bottom strip (28, 30) of the cross support (6) are each provided at the ends with a lap-shaped composite fibre extension (34), and in that the upper and lower strip laminates (10, 12) of the longitudinal support (4) and the extensions (34) of the cross support (6) are respectively joined together with plural layers interengaging and are adhered to each other by curing of the strip laminate and/or the extensions.

2. A corner joint according to claim 1, characterised in that the top or bottom strips respectively (10, 12; 28, 30) of the longitudinal and cross support (4, 6) are connected to one another on the outside of the strip by means of a composite fibre laminate (42) which clampingly embraces the strips in the region of the corner joint (8).

3. A corner joint according to claim 2, characterised in that the clamp-like composite fibre-laminate (42) is cross-sectionally U-shaped and in the region of the U-shanks (44) is laterally adhered to the spacers (14; 32) of the longitudinal and cross support (4, 6).

4. A corner joint according to claims 2 or 3, characterised in that the clamp-like composite fibrelaminate (42) has intersecting fibre orientation.

5. A corner joint according to one of the above claims, characterised in that the extensions (34) are formed, in one piece, with continuing fibre structure, onto the strips (28, 30) of the cross support (6).

6. A corner joint according to one of the above claims, characterised in that the extensions (34) are widened with respect to the strips (28, 30) of the cross support (6) and extend over substantially the entire breadth of the longidudinal-support strips (10, 12).

7. A corner joint according to one of the above claims, characterised in that each strip (10, 12) of the longitudinal support (4) is divided in the region of the corner joint into several composite fibre layers, which are substantially of same thickness, and which entrap between them the associated extension (34) of the cross support (6).

8. A corner joint according to one of the above claims, characterised in that the longitudinal support (4) is enclosed by a torsion shell (20), which is cut open in the region of the corner joint and which extends laterally with cut open wall sections (46) around the adjacent cross-support end section and into the area of strip.

9. A corner joint according to claim 8, characterised in that the torsion shell (20) is composed of several sections including U-shaped longitudinal upper and lower sections (22, 24), which enclose the respective strip regions (10, 12) of the longitudinal support (4), and of lateral shell parts (26).

10. A corner joint according to claim 8 or 9, characterised in that the torsion shell (20) has a + 45° fibre orientation relative to the longitudinal axis of the support.

11. A corner joint according to one of the previous claims, characterised in that provision is made for additional fibre layers with unidirectional fibre orientation relative to the longitudinal direction of the support for the purpose of local strengthening of the cross support (6) in the region of the strip ends and the extensions (34).

12. A corner joint according to one of the previous claims, characterised in that the strips (10, 12) of the longitudinal support (4) have undirectional fibre orientation in the longitudinal direction of the support, and, as spacers (14) between the strips, provision is made for composite fibre bridges (16) extending between the strips, which bridges are provided with slots (38) in the area of the corner joint to accommodate the extensions (34) of the cross support (6).

13. A corner joint according to one of the previous claims, characterised in that the cross support (6) is constructed to be a cross-sectionally rectangular, closed hollow support with a crosswise wound fibre structure and with upper and lower wall regions (28, 30) serving as strips, and lateral walls (32) serving as spacers.

14. A corner joint according to claim 13, characterised in that the hollow support (6) is stiffened by means of a composite fibre frame (36) in the area of its end section which is adjacent to the corner joint.

15. A corner joint according to one of the previous claims, characterised in that at least some components of the corner joint, including the strips (10, 12) of the one support (4), are joined in uncured condition and connected together by curing of the composite fibre material under the effects of pressure and heat.

## Revendications

1. Assemblage d'angle (8) entre un longeron (4) et une entretoise (6) en matériau composite renforcé de fibres, en particulier pour le châssis de bogie (2) d'une voiture de chemin de fer circulant à grande vitesse, chaque longeron ou entretoise (4, 6) étant muni d'une membrure supérieure et d'une membrure inférieure (10, 12 et 28, 30) en stratifié composite renforcé de fibres et d'une pièce d'écartement (14, 32) insérée entre les membrures, caractérisé par le fait que les membrures supérieure et inférieure (28, 30) de l'entretoise (6) sont respectivement pourvues à leurs extrémités d'un appendice (34) en forme de patte en matériau composite renforcé de fibres et que les stratifiés des membrures supérieure et inférieure (10, 12) du longeron (4) et les appendices (34) de l'entretoise (6) sont réunis avec plusieurs couches s'interpénétrant et sont mutuellement collés lors du durcissement des stratifiés des membrures et/ou des appendices.

2. Assemblage d'angle selon la revendication 1, caractérisé par le fait que les membrures supérieures et inférieures (10, 12; 28, 30) du longeron (4) et de l'entretoise (6) sont mutuellement réunies sur leurs faces externes par un stratifié (42) renforcé de fibres coiffant à la manière d'un serre-joint les membrures dans la zone de l'assemblage d'angle (8).

3. Assemblage d'angle selon la revendication 2, caractérisé par le fait que le stratifié composite renforcé de fibres en forme de serre-joint (42) a une section transversale en forme de U et est collé sur ses côtés aux pièces d'écartement (14; 32) du longeron (4) et de l'entretoise (6) dans la zone des branches (44) de l'U.

4. Assemblage d'angle selon la revendication 2 ou 3, caractérisé par le fait que le stratifié composite renforcé de fibres en forme de serre-joint (42) présente une orientation croisée des fibres.

5. Assemblage d'angle selon l'une des revendications précédentes, caractérisé par le fait que les appendices (34) sont façonnés d'une seule pièce sur les membrures (28, 30) de l'entretoise (6) avec structure continue des fibres.

6. Assemblage d'angle selon l'une des revendications précédentes, caractérisé par le fait que les appendices (34) sont réalisés élargis par rapport aux membrures (28, 30) de l'entretoise (6) et s'étendent sensiblement sur toute la largeur des membrures (10, 12) du longeron.

7. Assemblage d'angle selon l'une des revendications précédentes, caractérisé par le fait que chaque membrure (10, 12) du longeron (4) dans la zone de l'assemblage d'angle est subdivisée en plusieurs couches de matériau composite renforcé de fibres sensiblement de même épaisseur et incluant entre elles l'appendice y associé (34) de l'entretoise (6).

8. Assemblage d'angle selon l'une des revendications précédentes, caractérisé par le fait que le longeron (4) est entouré d'une coque de torsion (20) découpée dans la zone de l'assemblage d'angle et dont les sections de paroi découpées (46) entourent la section d'extrémité contiguë de l'entretoise sur les côtés et dans la zone des membrures.

9. Assemblage d'angle selon la revendication 8, caractérisé par le fait que la coque de torsion (20) est réalisée en plusieurs parties comprenant des parties latérales (26) et des parties supérieures et inférieures (22, 24) en forme de U entourant respectivement la zone des membrures (10, 12) du longeron (4).

10. Assemblage d'angle selon la revendication 8 ou 9, caractérisé par le fait que la coque de torsion (20) présente une orientation de fibres de plus ou moins 45° par rapport à l'axe longitudinal du longeron ou de l'entretoise.

11. Assemblage d'angle selon l'une des revendications précédentes, caractérisé par le fait que pour renforcer localement l'entretoise (6) dans la zone des extrémités des membrures et des appendices (34), on prévoit des couches de fibres supplémentaires avec orientation unidirectionnelle des fibres dans le sens longitudinal de l'entretoise.

12. Assemblage d'angle selon l'une des revendications précédentes, caractérisé par le fait que les membrures (10, 12) du longeron (4) présentent une orientation unidirectionnelle des fibres dans le sens longitudinal du longeron et que, comme pièces d'écartement (14) entre les membrures, on prévoit des traverses (16) en matériau composite fibreux qui s'étendent dans le stratifié des membrures et qui, dans la zone de l'assemblage d'angle, sont munies de fentes (38) destinées à recevoir les appendices (34) de l'entretoise (6).

13. Assemblage d'angle selon l'une des revendications précédentes, caractérisé par le fait que l'entretoise (6) est réalisée sous la forme d'une poutre creuse fermée de section transversale rectangulaire avec une structure de fibre enroulée se croisant et comportant des zones de paroi supérieure et inférieure (28, 30) faisant office de membrures et des parois latérales (32) faisant office de pièces d'écartement.

14. Assemblage d'angle selon la revendication 13, caractérisé par le fait que la poutre creuse (6) dans la zone de sa section d'extrémité contiguë à l'assemblage d'angle est renforcée par un panneau de raidissement plein (36) en matériau composite renforcé de fibres.

15. Assemblage d'angle selon l'une des revendications précédentes, caractérisé par le fait qu'au moins quelques parties constitutives de l'assemblage d'angle, y compris les membrures (10, 12) de l'un des longerons (4) sont assemblées à l'état non durci et sont collées sous pression et avec effet thermique par durcissement du matériau composite renforcé de fibres.

EP 0 260 440 B1

FIG. 1

FIG. 2

FIG. 3

FIG. 4

FIG. 5